# FASCICULE DE BREVET EUROPEEN

(11) **EP 3 666 368 B1**
(45) Date de publication et mention de la délivrance du brevet: **28.08.2024**
(21) Numéro de dépôt: 19214497.0
(22) Date de dépôt: 09.12.2019
(51) Int. Cl.: B01D 53/22, C10L 3/10

(54) **INSTALLATION ET PROCÉDÉ DE TRAITEMENT PAR PERMÉATION MEMBRANAIRE D'UN COURANT GAZEUX AVEC AJUSTEMENT DE LA CONCENTRATION EN MÉTHANE**
ANLAGE UND VERFAHREN ZUR BEHANDLUNG DURCH MEMBRANPERMEATION EINES GASSTROMS MIT ANPASSUNG DER METHAN-KONZENTRATION
SYSTEM AND METHOD FOR TREATING A GASEOUS CURRENT BY MEMBRANE PERMEATION WITH ADJUSTMENT OF THE METHANE CONCENTRATION

(30) Priorité: 14.12.2018 FR 1872938
(43) Date de publication de la demande: 17.06.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BARRAUD, François, 38360 Sassenage (FR); CHAREYRE, Jean-Marc, 38360 Sassenage (FR)
(74) Mandataire: Air Liquide

(56) Documents cités:
- WO-A1-2014/121964
- FR-A1- 3 010 640
- US-A1- 2015 336 046
- US-A1- 2018 223 205

## Description

La présente invention est relative à une installation de traitement par perméation membranaire d'un courant gazeux contenant au moins du méthane et du dioxyde de carbone pour produire un courant gazeux riche en méthane - dont la teneur en méthane est conforme aux besoins de son utilisation et à un procédé de commande d'une telle installation.

Elle concerne en particulier l'épuration de biogaz, dans le but de produire du biométhane conforme aux spécifications pour injection dans un réseau de gaz naturel.

Le biogaz est le gaz produit lors de la dégradation de matières organiques en l'absence d'oxygène (fermentation anaérobie) encore appelée méthanisation. Il peut s'agir d'une dégradation naturelle - on l'observe ainsi dans les marais ou les décharges d'ordures ménagères - mais la production de biogaz peut aussi résulter de la méthanisation de déchets dans un réacteur dédié, appelé méthaniseur ou digesteur.

De par ses constituants principaux - méthane et dioxyde de carbone - le biogaz est un puissant gaz à effet de serre ; il constitue aussi, parallèlement, une source d'énergie renouvelable appréciable dans un contexte de raréfaction des énergies fossiles.

Le biogaz contient majoritairement du méthane (CH4) et du dioxyde de carbone (CO2) dans des proportions variables en fonction du mode d'obtention mais également, en moindres proportions de l'eau, de l'azote, de l'hydrogène sulfuré, de l'oxygène, ainsi que des composés organiques autres, à l'état de traces.

Selon les matières organiques dégradées et les techniques utilisées, les proportions des composants diffèrent, mais en moyenne le biogaz comporte, sur gaz sec, de 30 à 75% de méthane, de 15 à 60% de CO2, de 0 à 15% d'azote, de 0 à 5% d'oxygène et des composés traces.

Le biogaz est valorisé de différentes manières. Il peut, après un traitement léger, être valorisé à proximité du site de production pour fournir de la chaleur, de l'électricité ou un mélange des deux (la cogénération); la teneur importante en dioxyde de carbone réduit son pouvoir calorifique, augmente les coûts de compression et de transport et limite l'intérêt économique de sa valorisation à cette utilisation de proximité.

Une purification plus poussée du biogaz permet sa plus large utilisation, en particulier, une purification poussée du biogaz permet d'obtenir un biogaz épuré aux spécifications du gaz naturel et qui pourra lui être substitué ; le biogaz ainsi purifié est le « biométhane ». Le biométhane complète ainsi les ressources de gaz naturel avec une partie renouvelable produite au coeur des territoires; il est utilisable pour exactement les mêmes usages que le gaz naturel d'origine fossile. Il peut alimenter un réseau de gaz naturel, une station de remplissage pour véhicules, il peut aussi être liquéfié pour être stocké sous forme de gaz naturel liquide (GNL).

Les modes de valorisation du biométhane sont déterminés en fonction des contextes locaux : besoins énergétiques locaux, possibilités de valorisation en tant que biométhane carburant, existence à proximité de réseaux de distribution ou de transport de gaz naturel notamment. Créant des synergies entre les différents acteurs oeuvrant sur un territoire (agriculteurs, industriels, pouvoirs publics), la production de biométhane aide les territoires à acquérir une plus grande autonomie énergétique.

Plusieurs étapes doivent être franchies entre la collecte du biogaz et l'obtention du biométhane, produit final apte à être comprimé ou liquéfié.

En particulier, plusieurs étapes sont nécessaires avant le traitement qui vise à séparer le dioxyde de carbone pour produire un courant de méthane purifié. Une première étape consiste à comprimer le biogaz qui a été produit et acheminé à pression atmosphérique, cette compression peut être obtenue - de façon classique - via un compresseur. Les étapes suivantes visent à débarrasser le biogaz des composants corrosifs que sont le sulfure d'hydrogène et les composés organiques volatils (COV), les technologies utilisées sont de façon classique l'adsorption à pression modulée (PSA) et le piégeage sur charbon actif. Vient ensuite l'étape qui consiste à séparer le dioxyde de carbone pour disposer in fine de méthane à la pureté requise pour son usage ultérieur.

Le dioxyde de carbone est un contaminant typiquement présent dans le gaz naturel dont il est courant de devoir le débarrasser. Des technologies variées sont utilisées pour cela en fonction des situations ; parmi celles-ci, la technologie membranaire est particulièrement performante lorsque la teneur en CO2 est élevée ; elle est donc pour séparer le CO2 présent dans le biogaz, provenant des gaz de décharge ou des digesteurs de déchets végétaux ou animaux.

Les procédés membranaires de séparation de gaz utilisés pour la purification d'un gaz, qu'ils utilisent un ou plusieurs étages de membranes doivent permettre la production d'un gaz à la qualité requise, pour un faible coût, tout en minimisant les pertes du gaz que l'on souhaite valoriser. Ainsi, dans le cas de l'épuration du biogaz, la séparation effectuée est principalement une séparation CH4/CO2, devant permettre la production d'un gaz contenant en fonction de son utilisation plus de 85% de CH4, de préférence plus de 95% de CH4, plus préférentiellement plus de 97,5% de CH4, tout en minimisant les pertes de CH4 dans le gaz résiduaire et le coût d'épuration, ce dernier étant pour une part importante lié à la consommation électrique du dispositif de compression du gaz en amont des membranes.

Le document publie sous le numéro US 2018/223205 A1 décrit un procédé de traitement de traitement du biogaz contenant du H2S et du CO2 par élimination du H2S à l'aide de PTSA (« pressure température swing adsorption » en anglais) et du CO2 à l'aide de membranes de séparation des gaz en deux étages.

Le document publie sous le numéro WO2014/121964 A1 décrit un procédé de séparation d'un mélange de gaz d'alimentation comprenant un gaz A et un gaz B à l'aide d'une unité de séparation à membrane pour obtenir un rétentat riche en gaz A dans lequel le côté perméat de la membrane est balayé par un flux de gaz comprenant le gaz B à un pourcentage inférieur à celui du gaz d'alimentation ou ne comprenant pas du tout le gaz B.

Le document publie sous le numéro US 2015/0336046 A1 décrit un procédé de contrôle d'une installation de séparation de gaz comprenant trois étages de séparation membranaire capable de fournir simultanément deux produits ou plus d'une grande pureté.

Il est préférable que le réseau de gaz naturel reçoive un courant de méthane présentant une concentration en méthane constante de manière à ce que les équipements qui utilisent le biomethane aient un fonctionnement régulier.

Partant de là, un problème qui se pose est de fournir une installation permettant l'obtention d'un courant de méthane à concentration constante.

Une solution de la présente invention est une installation pour le traitement par permeation membranaire d'un flux gazeux d'alimentation comprenant au moins du méthane et du dioxyde de carbone, comprenant:
- un compresseur A permettant de comprimer le flux gazeux d'alimentation,
- une première unité de séparation par membrane apte à recevoir le flux gazeux issu du compresseur et à fournir un premier perméat et un premier rétentat,
- une seconde unité de séparation par membrane apte à recevoir le premier rétentat et à fournir un second perméat et un second rétentat, le second perméat étant configuré pour être recyclé dans le flux gazeux d'alimentation en aval du compresseur A,
- une troisième unité de séparation par membrane apte à recevoir le premier perméat et à fournir un troisième perméat et un troisième rétentat, le troisième retentât étant configuré pour être recyclé au compresseur A permettant de comprimer le flux gazeux d'alimentation,
   avec chaque unité de séparation par membrane comprenant au moins une membrane plus perméable au dioxyde de carbone qu'au méthane,
- au moins un moyen de mesure de la pression d'aspiration du second perméat de la seconde unité membranaire,
- au moins un moyen de mesure de la concentration en méthane CH4 dans le second rétentat,
- au moins un compresseur B permettant l'aspiration du second perméat et l'ajustement de la pression du second perméat en fonction de la pression d'aspiration mesurée et de la concentration en méthane mesurée avant de recycler le second perméat dans le flux gazeux d'alimentation en aval du compresseur A,
- au moins un moyen d'ajustement de la pression du flux gazeux d'alimentation en fonction de la concentration en CH4 mesurée,
- le moyen d'ajustement de la pression du flux gazeux d'alimentation est le compresseur A ou une vanne de coupure et de mise en pression progressive, et
- des moyens de transmission de données et de traitement de données configurés pour réaliser automatiquement : la comparaison de la pression d'aspiration du second perméat mesurée et de la concentration en méthane dans le second retentât mesurée avec des valeurs de consigne, et l'ajustement de la pression du second perméat et de la pression du flux gazeux d'alimentation.

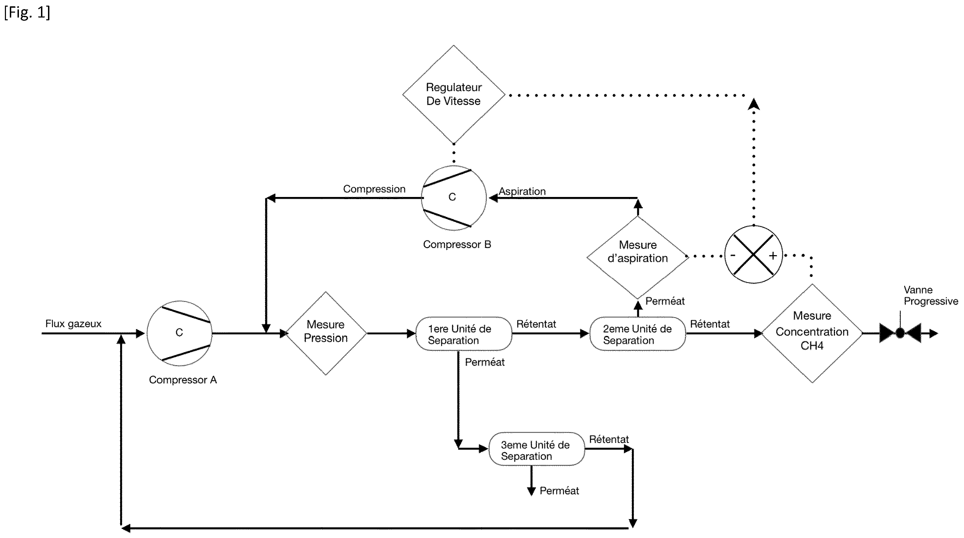

La figure 1 représente un exemple d'installation selon l'invention.

Selon le cas l'installation selon l'invention peut présenter une ou plusieurs des caractéristiques suivantes :
- le troisième retentât est recyclé au compresseur permettant de comprimer le flux gazeux d'alimentation ;
- les membranes utilisées dans les unités de séparation par membrane ont la même sélectivité ;
- au moins une unité de séparation par membrane comprend au moins deux membranes de sélectivités différentes.

La présente invention a également pour objet un procédé de commande d'une installation telle que définie dans l'invention, comprenant les étapes suivantes :
a. une étape de mesure de la pression du second perméat,
b. une étape de mesure de la concentration en méthane CH4 dans le second retentât,
c. une étape de comparaison de la pression mesurée à l'étape a) et de la concentration mesurée à l'étape b) avec des valeurs consigne, et de détermination de l'écart par rapport à ces valeurs consigne et,
d. une étape d'ajustement de la pression du second perméat à l'aide du compresseur B et de la pression du flux gazeux d'alimentation à l'aide du compresseur A ou à l'aide d'une vanne de coupure et de mise en pression progressive pour garder constante la valeur de concentration CH4 dans le deuxième retentât.

Selon le cas, le procédé selon l'invention peut présenter une ou plusieurs des caractéristiques ci-dessous :
- l'ajustement de la pression du flux gazeux d'alimentation comprend une augmentation ou une diminution de la pression ;
- à l'étape d'ajustement le compresseur B subit une accélération ou une décélération ; notons qu'une accélération du compresseur B conduira à une diminution du niveau de pression dans les membranes, et une décélération du compresseur B conduira à une augmentation du niveau de pression dans les membranes;
- l'étape de comparaison et l'étape d'ajustement sont réalisées automatiquement par des moyens de transmission de données et de traitement de données ;
- le flux gazeux d'alimentation est du biogaz.

Un moyen de transmission de données et de traitement de données pourra être par exemple un calculateur industriel de type Automate Programmable.

## Revendications

1. Installation pour le traitement par perméation membranaire d'un flux gazeux d'alimentation comprenant au moins du méthane et du dioxyde de carbone, comprenant:
- un compresseur A permettant de comprimer le flux gazeux d'alimentation,
- une première unité de séparation par membrane apte à recevoir le flux gazeux issu du compresseur et à fournir un premier perméat et un premier retentât,
- une seconde unité de séparation par membrane apte à recevoir le premier retentât et à fournir un second perméat et un second retentât, le second perméat étant configuré pour être recyclé dans le flux gazeux d'alimentation en aval du compresseur A,
- une troisième unité de séparation par membrane apte à recevoir le premier perméat et à fournir un troisième perméat et un troisième retentât, le troisième retentât étant configuré pour être recyclé au compresseur A permettant de comprimer le flux gazeux d'alimentation,
avec chaque unité de séparation par membrane comprenant au moins une membrane plus perméable au dioxyde de carbone qu'au méthane,
- au moins un moyen de mesure de la pression d'aspiration du second perméat de la seconde unité membranaire,
- au moins un moyen de mesure de la concentration en méthane CH4 dans le second retentât,
- au moins un compresseur B permettant l'aspiration du second perméat et l'ajustement de la pression du second perméat en fonction de la pression d'aspiration mesurée et de la concentration en méthane mesurée avant de recycler le second perméat dans le flux gazeux d'alimentation en aval du compresseur A,
- au moins un moyen d'ajustement de la pression du flux gazeux d'alimentation en fonction de la concentration en CH4 mesurée,
le moyen d'ajustement de la pression du flux gazeux d'alimentation étant le compresseur A ou une vanne de coupure et de mise en pression progressive, et
- des moyens de transmission de données et de traitement de données configurés pour réaliser automatiquement : la comparaison de la pression d'aspiration du second perméat mesurée et de la concentration en méthane dans le second retentât mesurée avec des valeurs de consigne, et l'ajustement de la pression du second perméat et de la pression du flux gazeux d'alimentation.

2. Installation selon la revendication 1, **caractérisée en ce que** les membranes utilisées dans les unités de séparation par membrane ont la même sélectivité.

3. Installation selon la revendication 1 ou 2, **caractérisée en ce qu'**au moins une unité de séparation par membrane comprend au moins deux membranes de sélectivités différentes.

4. Procédé de commande d'une installation telle que définie dans l'une des revendications 1 à 3, comprenant les étapes suivantes :
a) une étape de mesure de la pression du second perméat,
b) une étape de mesure de la concentration en méthane CH4 dans le second rétentat,
c) une étape de comparaison de la pression mesurée à l'étape a) et de la concentration mesurée à l'étape b) avec des valeurs consigne, et de détermination de l'écart par rapport à ces valeurs consigne et,
d) une étape d'ajustement de la pression du second perméat à l'aide du compresseur B et de la pression du flux gazeux d'alimentation à l'aide du compresseur A ou à l'aide d'une vanne de coupure et de mise en pression progressive.

5. Procédé selon la revendication 4, **caractérisé en ce que** l'ajustement de la pression du flux gazeux d'alimentation comprend une augmentation ou une diminution de la pression.

6. Procédé selon la revendication 4 ou 5, **caractérisé en ce qu'**à l'étape d'ajustement le compresseur B subit une accélération ou une décélération.

7. Procédé selon l'une des revendications 4 à 6, **caractérisé en ce que** l'étape de comparaison et l'étape d'ajustement sont réalisées automatiquement par les moyens de transmission de données et de traitement de données.

8. Procédé selon l'une des revendications 4 à 7, **caractérisé en ce que** le flux gazeux d'alimentation est du biogaz.

## Patentansprüche

1. Anlage zur Verarbeitung eines Feed-Gasstroms, der mindestens Methan und Kohlendioxid umfasst, durch Membranpermeation, umfassend:
- einen Kompressor A, der es ermöglicht, den Feed-Gasstrom zu verdichten,
- eine erste Membrantrenneinheit, die geeignet ist, den aus dem Kompressor hervorgegangenen Gasstrom aufzunehmen und ein erstes Permeat und ein erstes Retentat bereitzustellen,
- eine zweite Membrantrenneinheit, die geeignet ist, das erste Retentat aufzunehmen und ein zweites Permeat und ein zweites Retentat bereitzustellen, wobei das zweite Permeat dazu ausgebildet ist, stromab des Kompressors A in den Feed-Gasstrom zurückgeführt werden,
- eine dritte Membrantrenneinheit, die geeignet ist, das erste Permeat aufzunehmen und ein drittes Permeat und ein drittes Retentat bereitzustellen, wobei das dritte Retentat dazu ausgebildet ist, zu dem Kompressor A zurückgeführt zu werden, der es ermöglicht, den Feed-Gasstrom zu verdichten,
wobei jede Membrantrenneinheit mindestens eine Membran umfasst, die für Kohlendioxid durchlässiger als für Methan ist,
- mindestens ein Mittel zum Messen des Ansaugdrucks des zweiten Permeats der zweiten Membraneinheit,
- mindestens ein Mittel zum Messen der Konzentration an Methan CH4 in dem zweiten Retentat,
- mindestens einen Kompressor B, der das Ansaugen des zweiten Permeats und das Anpassen des Drucks des zweiten Permeats in Abhängigkeit von dem gemessenen Ansaugdruck und von der gemessenen Konzentration an Methan ermöglicht, bevor das zweite Permeat stromab des Kompressors A in den Feed-Gasstrom zurückgeführt wird,
- mindestens ein Mittel zum Anpassen des Drucks des Feed-Gasstroms in Abhängigkeit von der gemessenen Konzentration an CH4,
wobei das Mittel zum Anpassen des Drucks des Feed-Gasstroms der Kompressor A oder ein Abschalt- oder Softstartventil ist, und
- Datenübertragungs- und Datenverarbeitungsmittel, die dazu ausgebildet sind, automatisch auszuführen: das Vergleichen des gemessenen Ansaugdrucks des zweiten Permeats und der gemessenen Konzentration an Methan in dem zweiten Retentat mit Sollwerten und das Anpassen des Drucks des zweiten Permeats und des Drucks des Feed-Gasstroms.

2. Anlage nach Anspruch 1, **dadurch gekennzeichnet, dass** die in den Membrantrenneinheiten verwendeten Membranen die gleiche Selektivität haben.

3. Anlage nach Anspruch 1 oder 2, **dadurch gekennzeichnet, dass** mindestens eine Membrantrenneinheit mindestens zwei Membranen mit unterschiedlichen Selektivitäten umfasst.

4. Verfahren zum Steuern einer wie in einem der Ansprüche 1 bis 3 definierten Anlage, umfassend die folgenden Schritte:
a) einen Schritt des Messens des Drucks des zweiten Permeats,
b) einen Schritt des Messens der Konzentration an Methan CH4 in dem zweiten Retentat,
c) einen Schritt des Vergleichens des im Schritt a) gemessenen Drucks und der im Schritt b) gemessenen Konzentration mit Sollwerten und des Bestimmens der Abweichung von diesen Sollwerten und,
d) einen Schritt des Anpassens des Drucks des zweiten Permeats mithilfe des Kompressors B und des Drucks des Feed-Gasstroms mithilfe des Kompressors A oder mithilfe eines Abschalt- und Softstartventils.

5. Verfahren nach Anspruch 4, **dadurch gekennzeichnet, dass** das Anpassen des Drucks des Feed-Gasstroms eine Erhöhung oder Verringerung des Drucks umfasst.

6. Verfahren nach Anspruch 4 oder 5, **dadurch gekennzeichnet, dass** der Kompressor B im Schritt des Anpassens eine Beschleunigung oder eine Verzögerung erfährt.

7. Verfahren nach einem der Ansprüche 4 bis 6, **dadurch gekennzeichnet, dass** der Schritt des Vergleichens und der Schritt des Anpassens von den Datenübertragungs- und Datenverarbeitungsmitteln automatisch ausgeführt werden.

8. Verfahren nach einem der Ansprüche 4 bis 7, **dadurch gekennzeichnet, dass** der Feed-Gasstrom Biogas ist.

## Claims

1. Installation for the membrane permeation treatment of a feed gas flow containing at least methane and carbon dioxide, comprising:
- a compressor A for compressing the feed gas flow,
- a first membrane separation unit able to receive the gas flow coming from the compressor and to supply a first permeate and a first retentate,
- a second membrane separation unit able to receive the first retentate and to supply a second permeate and a second retentate, the second permeate being configured to be recycled into the feed gas flow downstream of the compressor A,
- a third membrane separation unit able to receive the first permeate and to supply a third permeate and a third retentate, the third retentate being configured to be recycled to the compressor A used for compressing the feed gas flow,
with each membrane separation unit comprising at least one membrane that is more permeable to carbon dioxide than to methane,
- at least one measurement means for measuring the aspiration pressure of the second permeate of the second membrane unit,
- at least one measurement means for measuring the methane CH4 concentration in the second retentate,
- at least one compressor B for aspirating the second permeate and adjusting the pressure of the second permeate according to the aspiration pressure measured and the methane concentration measured before recycling the second permeate into the feed gas flow downstream of the compressor A,
- at least one pressure adjustment means for adjusting the pressure of the feed gas flow according to the CH4 concentration measured,
the pressure adjustment means for adjusting the pressure of the feed gas flow being the compressor A or a progressive shut-off and pressurization valve, and
- data transmission and data processing means configured to automatically: compare the measured aspiration pressure of the second permeate and the measured methane concentration in the second retentate against setpoint values, and adjust the pressure of the second permeate and the pressure of the feed gas flow.

2. Installation according to Claim 1, **characterized in that** the membranes used in the membrane separation units have the same selectivity.

3. Installation according to either of Claims 1 and 2, **characterized in that** at least one membrane separation unit comprises at least two membranes with different selectivities.

4. Method for controlling an installation as defined in one of Claims 1 to 3, comprising the following steps:
a) a step of measuring the pressure of the second permeate,
b) a step of measuring the methane CH4 concentration in the second retentate,
c) a step of comparing the pressure measured in step a) and the concentration measured in step b) against setpoint values, and of determining the discrepancy with respect to these setpoint values, and
d) a step of adjusting the pressure of the second permeate using the compressor B and the pressure of the feed gas flow using the compressor A or using a progressive shut-off and pressurization valve.

5. Method according to Claim 4, **characterized in that** the adjustment of the pressure of the feed gas flow involves increasing or decreasing the pressure.

6. Method according to either of Claims 4 and 5, **characterized in that**, in the adjustment step, the compressor B is accelerated or decelerated.

7. Method according to one of Claims 4 to 6, **characterized in that** the comparison step and the adjustment step are performed automatically by the data transmission and data processing means.

8. Method according to one of Claims 4 to 7, **characterized in that** the feed gas flow is biogas.
